# EUROPEAN PATENT APPLICATION

(11) **EP 2 431 894 A1**
(43) Date of publication of application: **21.03.2012**
(21) Application number: 10793549.6
(22) Date of filing: 09.06.2010
(51) Int. Cl.: G06F 17/30

(54) **SEARCH METHOD, DEVICE AND SYSTEM**

(30) Priority: 30.06.2009 CN 200910108547
(71) Applicant: Huawei Technologies Co., Ltd., Shenzhen, Guangdong 518129 (CN)
(72) Inventor: PIAO, Ning, Shenzhen Guangdong 518129 (CN); HU, Hanqiang, Shenzhen Guangdong 518129 (CN); ZHANG, Fei, Shenzhen Guangdong 518129 (CN)
(74) Representative: Pfenning, Meinig & Partner GbR
(86) International application number: PCT/CN2010/073691
(87) International publication number: WO 2011/000254

(57) **Abstract**

A search method, apparatus, and system are provided. The search method includes: receiving search information customized by a subscriber, where the search information includes search conditions and customized search time information; updating the search conditions customized by the subscriber according to dynamic information of the subscriber; obtaining search results searched out by a search engine according to the updated search conditions upon arrival of the customized search time; and presenting the search results.

## Description

This application claims priority to Chinese Patent Application No. 200910108547.2, filed with the Chinese Patent Office on June 30, 2009 and entitled "SEARCH METHOD, APPARATUS, AND SYSTEM", which is incorporated herein by reference in its entirety.

### FIELD OF THE INVENTION

The present invention relates to communication technologies, and in particular, to a search method, apparatus, and system.

### BACKGROUND OF THE INVENTION

With the rapid development of technologies and improvement of living standards, the liaison between people is not limited to correspondence and simple means of transport, and modern communication modes emerge in everyday life of people. Terminals such as mobile phones, Personal Digital Assistants (PDAs), and Personal Computers (PCs) enrich the communication and life of people. The function of searching for information on a terminal is improved, but the emergence of search engines brings some problems.

A conventional search engine can only search for information according to keywords input by a subscriber, and a few search engines support the customized search service. Through the customized search service, the system presents the latest search results desired by the subscriber to the subscriber at intervals in a future period according to the keywords preset by the subscriber.

In the process of implementing the present invention, the inventor finds that: In the conventional customized search service, because the subscriber sets the keyword beforehand, the keyword is fixed in every attempt of searching; however, the information required by the subscriber may change over time, and the preset keyword does not meet latest requirements of the subscriber; the subscriber has to modify the keyword frequently, which makes it rather inconvenient to use the customized search service, and makes the service hardly promotable. For example, when subscriber A wants to know information about new styles of clothes and places of purchase, the conventional customized search service provides information about all new styles of clothes regardless of the dynamic information of the subscriber, for example, location information. The subscriber needs to select the desired information among the huge amount of information searched out, which makes the search operation rather inconvenient for the subscriber.

### SUMMARY OF THE INVENTION

The embodiments of the present invention provide a customized search method to overcome the problem of fixed search conditions in the conventional customized search service and facilitate use of the service.

The embodiments of the present invention provide a customized search system to overcome the problem of fixed search conditions in the conventional customized search service and facilitate use of the service.

The embodiments of the present invention provide a customized search apparatus to overcome the problem of fixed search conditions in the conventional customized search service and facilitate use of the service.

The embodiments of the present invention are implemented through the following technical solution:

A search method includes:
receiving search information customized by a subscriber, where the search information includes search conditions and customized search time information;
updating the search conditions customized by the subscriber according to dynamic information of the subscriber;
obtaining search results searched out by a search engine according to the search conditions upon arrival of the customized search time; and
presenting the search results.

A search system includes:
a customized search subsystem, configured to: receive search information that includes search conditions and customized search time information, update the search conditions customized by a subscriber according to dynamic information of the subscriber, obtain search results searched out by a search engine according to the search conditions upon arrival of the customized search time information, and present the search results; and
the search engine, configured to search out the search results as requested by the customized search subsystem.

A customized search apparatus includes:
a service customizing module, configured to receive search information customized by a subscriber, where the search information includes search conditions and customized search time information;
a customized search condition updating module, configured to update the search conditions customized by the subscriber according to dynamic information of the subscriber;
a search dispatch module, configured to send a search request to a search system according to the search conditions; and
a search result feedback module, configured to present search results to the subscriber according to results returned by the search system.

In the embodiments of the present invention, the search conditions can be updated according to dynamic information of the subscriber; therefore, the subscriber does not need to change the keyword frequently in the customized search service, and the search keyword changes with the update of dynamic information of the subscriber, which facilitates the subscriber, improves the subscriber experience, and helps promote the service.

### BRIEF DESCRIPTION OF THE DRAWINGS

FIG. 1 is a schematic structure diagram of a search system according to an embodiment of the present invention;

FIG. 2 is a schematic structure diagram of a search system based on a meta search engine according to an embodiment of the present invention;

FIG. 3 is a schematic structure diagram of a customized search subsystem according to an embodiment of the present invention;

FIG. 4 is a flowchart of a search method according to an embodiment of the present invention;

FIG. 5 is a negotiation flowchart according to an embodiment of the present invention; and

FIG. 6 is an application flowchart of a search method according to an embodiment of the present invention.

### DETAILED DESCRIPTION OF THE EMBODIMENTS

To make the technical solution of the present invention clearer to those skilled in the art, the following describes the technical solution of the present invention in detail with reference to accompanying drawings and exemplary embodiments.

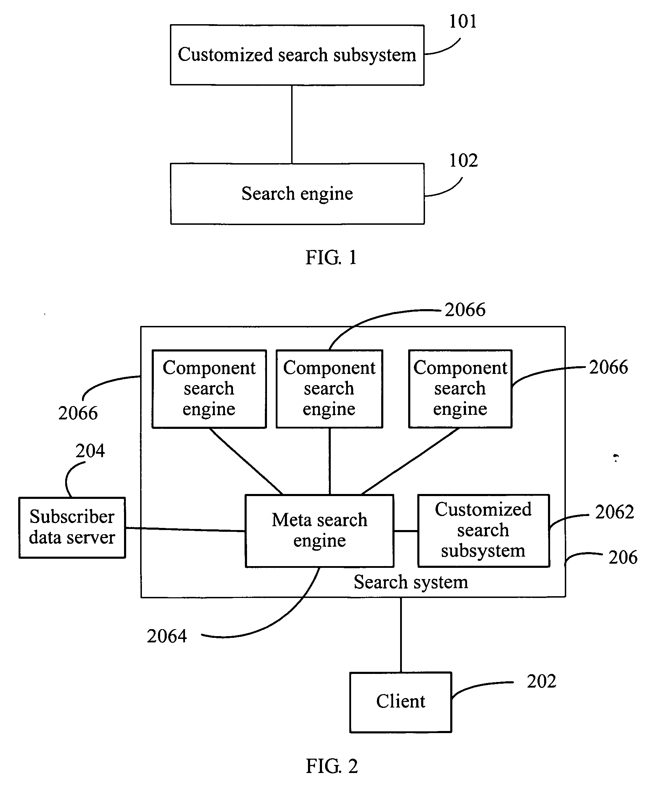

FIG. 1 is a schematic structure diagram of a search system according to an embodiment of the present invention. The search system includes:
a customized search subsystem 101, configured to: receive search information customized by a subscriber, where the search information includes search conditions and customized search time information, update the search conditions customized by the subscriber according to dynamic information of the subscriber, obtain search results searched out by a search engine according to the search conditions upon arrival of the customized search time information, and present the search results; and
a search engine 102, configured to search out the search results as requested by the customized search subsystem.

In this embodiment, after the subscriber customizes the search information in the customized search subsystem, the customized search subsystem 101 can obtain dynamic information of the subscriber from a subscriber data server (such as a location server or a presence server) at fixed time or in real time. The customized search subsystem 101 sends a search request to the subscriber data server, or the subscriber data server reports the dynamic information of the subscriber when the subscriber state changes. The customized search subsystem 101 updates the search conditions according to the obtained dynamic information. Therefore, the search conditions can be updated automatically according to dynamic information of the subscriber; the subscriber does not need to change the keyword frequently in the customized search service, and the search keyword changes with the update of dynamic information of the subscriber, which facilitates the subscriber, improves the subscriber experience, and helps promote the service.

The search system in this embodiment may be based on a Hyper Text Transfer Protocol (HTTP) search engine or a Wireless Application Protocol (WAP) search engine, or a meta search engine. The meta search engine is taken as an example herein. FIG 2 is a schematic structure diagram of a search system based on a meta search engine according to an embodiment of the present invention. The physical entities illustrated in FIG. 2 include a client 202, a subscriber data server 204, and a search system 206.

The client 202 is configured to: report search information of customized search to a customized search subsystem 2062 according to the input of the subscriber, where the search information includes search conditions and customized search time information; and receive search results presented by the search system 206.

The subscriber data server 204 is configured to store subscriber data and present the subscriber data to the customized search subsystem 2062 as a basis for updating the search conditions customized by the subscriber, where the subscriber data includes dynamic information of the subscriber such as location information, presence information, and individual information.

The search system 206 may include the customized search subsystem 2062 and a meta search engine 2064.

The customized search subsystem 2062 is configured to: receive search information customized by a subscriber, where the search information includes search conditions and customized search time information, update the search conditions customized by the subscriber according to dynamic information of the subscriber, obtain search results searched out by the search engine according to the search conditions upon arrival of the customized search time information, and present the search results to the client 202. The dynamic information of the subscriber includes: presence information of the subscriber, location information of the subscriber, or individual information of the subscriber.

The meta search engine 2064 is configured to search out the search results as requested by the customized search subsystem 2062.

The meta search engine 2064 may use a search function thereof to perform search as requested by the customized search subsystem 2062, or distribute a search requests to component search engines 2066 and receive search results returned by the component search engines 2066 in real time. In the case that the search is performed by the component search engines 2066, the search system 206 may further include:
component search engines 2066, configured to search out component search results according to the search request from the meta search engine 2064, and return the component search results to the meta search engine 2064. The component search engines 2066 may be responsible for vertical search in one or more fields.

In another embodiment, a search subscriber may recommend the customized search to other independent subscribers or groups. In this case, the subscriber needs to specify the target subscribers in the customized search information. The customized search subsystem 2062 presents the search results to the specified target subscribers after completion of the search.

Optionally, the customized search subsystem 2062 is further configured to negotiate with the target subscribers when receiving the search information customized by the subscriber or presenting the search results to the target subscribers. If any target subscriber fails in the negotiation or rejects the customized search service, the search results are presented to only the target subscribers who negotiate successfully or agree to accept the customized search service. As regards a subscriber group, the search results are presented to only the members who negotiate successfully or agree to accept the customized search service.

Optionally, when updating the search conditions according to dynamic information of the subscriber, the customized search subsystem 2062 may update the search conditions according to the dynamic information of the subscriber or according to the dynamic information of the target subscribers. The step of updating the search conditions according to the dynamic information of the target subscribers may include: obtaining dynamic information of target subscribers of the customized search, and adding the keywords extracted from the dynamic information of each target subscriber to the search conditions respectively to form the search conditions corresponding to each target subscriber.

In this embodiment, the search results are presented to the groups so that a search recommendation service is implemented; through negotiation with members in the group, information security is ensured.

In this embodiment, the search time customized by the subscriber may be fixed time or periodic time, and the search results are presented to the subscriber at intervals of the periodic time. The customized search time information may also be updated according to the dynamic information of the subscriber. For example, the periodic time customized by the subscriber is one week, but the presence information of the subscriber reflects that the subscriber requires the search results more frequently, and therefore, the periodic time changes to one day. The periodic time information may also be updated according to the requirements input by the subscriber. In this embodiment, the customized search time information of the subscriber is updated so that the customized time information changes as required by the subscriber.

Optionally, when the customized search time is multiple time points, the customized search subsystem compares the current search results with the historical search results of the customized task, presents the search results updated in the period from the previous search time to the current search time, and adds the current search results which are saved as the historical search results of the current customized task.

Optionally, if the subscriber is unavailable at the time of presenting the search results to the subscriber, the search results may be buffered temporarily, and pushed to the subscriber when the subscriber is available.

In this embodiment, the search results are buffered when the subscriber is unavailable, which avoids losing the search results and ensures integrity of data.

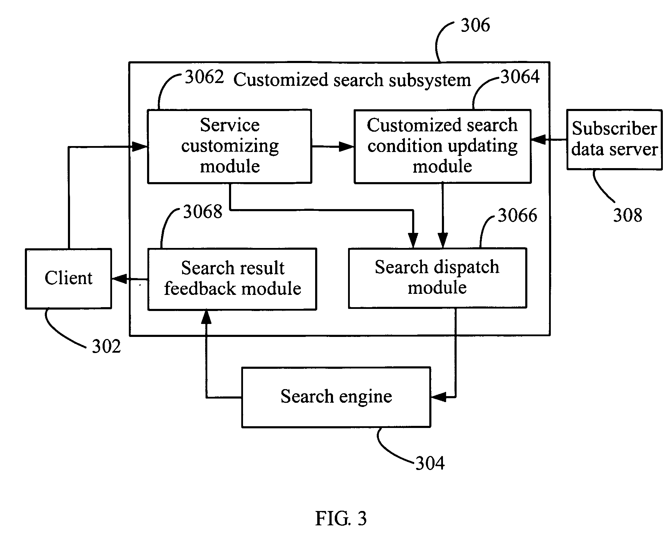

FIG. 3 is a schematic structure diagram of a customized search subsystem according to an embodiment of the present invention.

The customized search subsystem 306 includes: a service customizing module 3062, a customized search condition updating module 3064, a search dispatch module 3066, and a search result feedback module 3068.

The service customizing module 3062 is configured to receive search information customized by a subscriber, where the search information includes search conditions and customized search time information. The search conditions may include a search keyword, a search type, or a search scope, or any combination thereof. The search time may be fixed time or periodic time, and the search results are presented to the subscriber at intervals of the periodic time. The customized search time information may be updated according to dynamic information of the subscriber.

In another embodiment, the service customizing module 3062 may receive the search information customized by the subscriber and recommended to other target subscribers. The target subscribers may be independent subscribers or a subscriber group. The service customizing module may negotiate the customization with an independent subscriber or members in a group. The negotiation with an independent subscriber includes the negotiation with the subscriber or a friend recommended by the subscriber. The customized search task is not generated or the search results are not presented to target subscribers unless the negotiation succeeds. The negotiation with a subscriber group includes negotiation with every member in the group. If any member in the group fails in the negotiation or rejects the future customized search service, the search results are presented to only the members who negotiate successfully or agree to accept the customized search service. A short message or media message fed back by the subscriber or list information selected by the subscriber may be used as a basis for judging whether the negotiation succeeds or whether the subscriber agrees to accept the customized search service. Finally, the target subscribers of the customized search task, the customized search conditions, and the customized search time are generated.

The customized search condition updating module 3064 is configured to update the search conditions customized by the subscriber according to dynamic information of the subscriber. The customized search condition updating module 3064 may update the customized search conditions upon arrival of the customized search time according to the dynamic information of the subscriber (including location information, presence information, and individual information). For example, the customized search keyword is "fashion", and if the location information of the subscriber shows that the subscriber is in Shenzhen, the search conditions are modified to " search for fashion in Shenzhen with the search scope being Shenzhen "; if the subscriber is on a business trip in Beijing, the search scope is modified to " Beijing to search for fashion in Beijing ". A customized search condition updating module may update the customized search conditions in real time upon change of the subscriber state.

The search dispatch module 3066 is configured to send a search request to a search engine 304 according to the updated search conditions. The updated search conditions may include only the dynamic information of the subscriber. Optionally, when the customized search time is multiple time points, the search request sent by the search dispatch module 3066 may request to search only the content in the period from the previous search time to the current search time, namely, to search only updated information rather than the previously searched information, or request to search all information. The search result feedback module 3068 performs filtering according to the historical search results when the search result feedback module 3068 feeds back the results.

The search result feedback module 3068 is configured to present the search results. The step of presenting the search results may include: presenting the search results to the subscriber of the customized search service and/or to the target subscribers specified by the subscriber. The target subscribers may include independent subscribers and a subscriber group. The step of presenting the search results to a subscriber group includes: presenting the search results to the group that includes the subscriber or to the group that does not include the subscriber.

In another embodiment, if the subscriber specifies target subscribers for receiving the search results, the search result feedback module 3068 may negotiate with the target subscribers when presenting the search results to the target subscribers, and present the search results to only the target subscribers who negotiate successfully or agree to accept the customized search service if any target subscriber fails in the negotiation or rejects the customized search service. As regards a subscriber group, the search results are presented to only the members who negotiate successfully or agree to accept the customized search service. The negotiation with the target subscribers includes: judging whether the negotiation succeeds or whether the subscriber agrees to accept the future customized search service according to a short message or media message fed back by the target subscriber, or list information selected by the subscriber.

The customized search condition updating module 3064 may update the search conditions according to dynamic information of the target when updating the search conditions according to the dynamic information of the subscriber. The detailed update procedure may include: obtaining dynamic information of target subscribers of the customized search, and adding the keywords extracted from the dynamic information of each target subscriber to the search conditions respectively to form the search conditions corresponding to each target subscriber.

The search result feedback module 3068 may present the search results to the subscriber in real time, or store the search results and present the search results later, for example, buffer the search results when the subscriber is unavailable and present the search results when the subscriber is available. The search result feedback module 3068 may retrieve the search results of the search engine in real time, compare the search results with the historical search results of this customized task to obtain the updated search results, push the updated search results to the target subscribers, and add the search results which are saved as the historical search results of the customized task. If the target subscriber is unavailable, the updated search results are buffered temporarily, and pushed to the target subscriber when the target subscriber is available. The search result feedback module 3068 may present all search results to the target subscriber without comparing the search results with the historical search results.

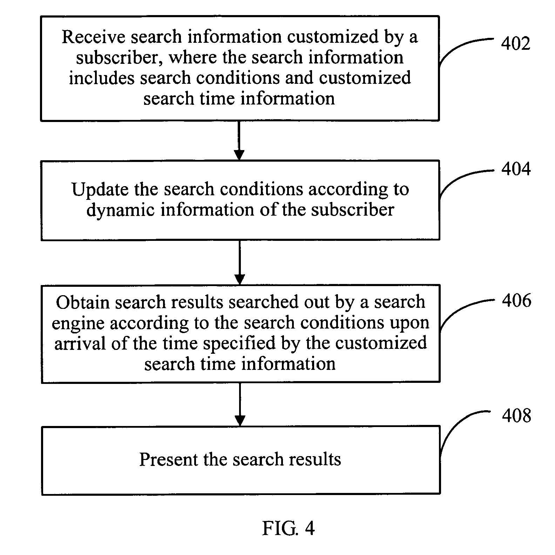

FIG 4 is a flowchart of a search method according to an embodiment of the present invention. The search method includes the following steps:

Step 402: Receive search information customized by a subscriber, where the search information includes search conditions and customized search time information. The search conditions may include a search keyword, a search type, or a search scope, or any combination thereof. The customized search time information may be fixed time or periodic time, and search results are presented to the subscriber at intervals of the periodic time.

Step 404: Update the search conditions according to dynamic information of the subscriber. The dynamic information of the subscriber includes: presence information, location information, or individual information, or any combination thereof. The search conditions may also include only the dynamic information of the subscriber, for example, search results are presented to the subscriber according to only the current state of the subscriber.

Step 406: Obtain search results searched out by a search engine according to the search conditions upon arrival of the time specified by the customized search time information.

Step 408: Present the search results.

In another embodiment, the search subscriber may recommend the customized search to other independent subscribers or groups. In this case, the subscriber needs to specify the target subscribers in the customized search information, and the search information received in step 402 further includes information about target subscribers of the customized search service. The target subscribers may be independent subscribers or a subscriber group.

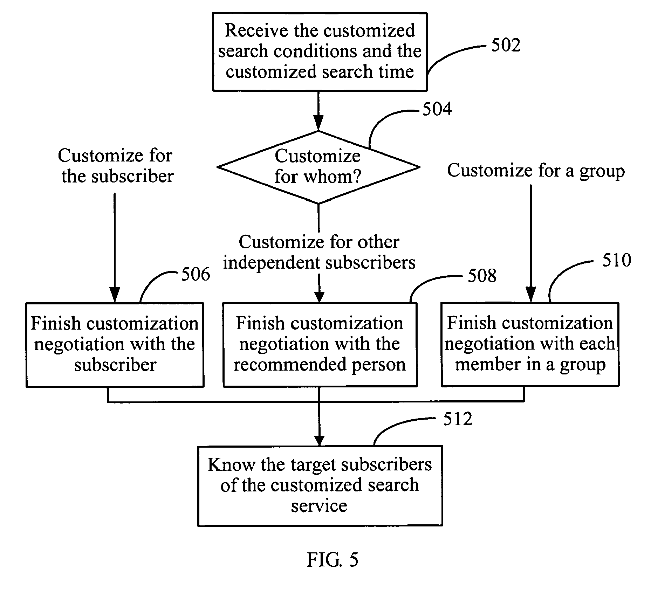

Optionally, in the case of receiving the search information customized by the subscriber or presenting the search results to the target subscribers, the method may further include: negotiating with the target subscribers. If any target subscriber fails in the negotiation or rejects the customized search service, the search results are presented to only the target subscribers who negotiate successfully or agree to accept the customized search service. As regards a subscriber group, the search results are presented to only the members who negotiate successfully or agree to accept the customized search service. The process of negotiation with the target subscribers is illustrated below by taking an example in which the negotiation is performed when receiving the search information customized by the subscriber. As shown in FIG. 5, the process of negotiation includes the following steps:

Step 502: Receive search information customized by a subscriber, where the search information includes search conditions, customized search time information, and information about target subscribers of the customized search service. The search conditions include a search keyword, a search type, or a search scope, or any combination thereof. The customized search time information may be fixed time or periodic time, and the search results are presented to the subscriber at intervals of the periodic time.

Step 504: Judge the target subscribers of the customized search service according to the search information customized by the subscriber. Target subscribers may include: the subscriber that subscribes to the search service, and other independent subscribers or groups. If the search is customized for the subscriber, the procedure proceeds to step 506; if the search is customized for other independent subscribers, the procedure proceeds to step 508; if the search is customized for a group, the procedure proceeds to step 510.

Step 506: Finish customization negotiation with the subscriber. A short message or media message fed back by the subscriber or list information selected by the subscriber may be used as a basis for judging whether the negotiation succeeds or whether the subscriber agrees to accept the future customized search service.

Step 508: Finish customization negotiation with other independent subscribers recommended. The short message or media message fed back by the subscriber or the list information selected by the subscriber may be used as a basis for judging whether the negotiation succeeds or whether the subscriber agrees to accept the future customized search service.

Step 510: Finish customization negotiation with each member in a group. If any member in the group fails in the negotiation or rejects the future customized search service, the search results are presented to only the members who negotiate successfully or accept the customized search service. The negotiation with a member or an administrator of a group includes: judging whether the negotiation succeeds or whether the member agrees to accept the future customized search service according to a short message or media message fed back by the member, or the list information selected by the subscriber.

Step 512: Know the target subscribers of the customized search service according to the negotiation results.

In the case of presenting the search results to the target subscribers, the negotiation process is similar to the procedure shown in FIG 5, which is not repeated herein.

In another embodiment, the update of the search conditions according to the dynamic information of the subscribers in step 404 may include: obtaining dynamic information of the subscriber, extracting a keyword from the obtained dynamic information, and adding the keyword to the search conditions customized by the subscriber to form new search conditions. Specifically, the keyword may be extracted by removing the obsolete word. For example, when the customized search conditions are changed dynamically according to the presence information of the subscriber, if the customized search conditions are "vogue information" and the obtained presence information is "the subscriber is touring", the extracted keyword is "tour", and the search conditions are extended to "tour vogue information"; if the presence information is "the subscriber is playing football", the extracted keyword is "football" and the search conditions are extended to "football vogue information"; if the subscriber is shopping, the search conditions are extended to "shopping vogue information".

If the subscriber specifies target subscribers for receiving the customized search results, the search conditions may be updated according to dynamic information of the subscriber, or according to dynamic information of the target subscribers. The step of updating the search conditions according to the dynamic information of the target subscribers may include: obtaining dynamic information of the target subscribers, and adding the keyword extracted from the dynamic information of each target subscriber to the search conditions respectively to form the search conditions corresponding to each target subscriber; performing retrieving according to the search conditions of each target subscriber upon arrival of the customized search time, and presenting the retrieved results to the corresponding target subscriber.

Optionally, in the update process, the customized search time information may be updated according to the dynamic information of the subscriber. For example, the periodic time customized by the subscriber is one week, but the presence information of the subscriber reflects that the subscriber requires the search results more frequently, and therefore, the periodic time changes to one day. The periodic time information may be updated according to the requirements input by the subscriber.

Optionally, in another embodiment, when the customized search time is multiple time points, when the customized search time information in step 406 arrives, the search request may request to search only the content in the period from the previous search time to the current search time, namely, to search only updated information rather than the previously searched information. A search request may request to search all information, and the search results are filtered when being presented in step 408. The specific filtering process is: comparing the current search result with the historical search results of the customized task, presenting the search results updated in the period from the previous search time to the current search time, and adding the current search results which are saved as the historical search results of the current customized task.

In this embodiment, the search results may be presented to the subscriber in real time, or may be buffered first and presented later. For example, the search results are buffered when the subscriber is unavailable, and presented to the subscriber when the subscriber is available.

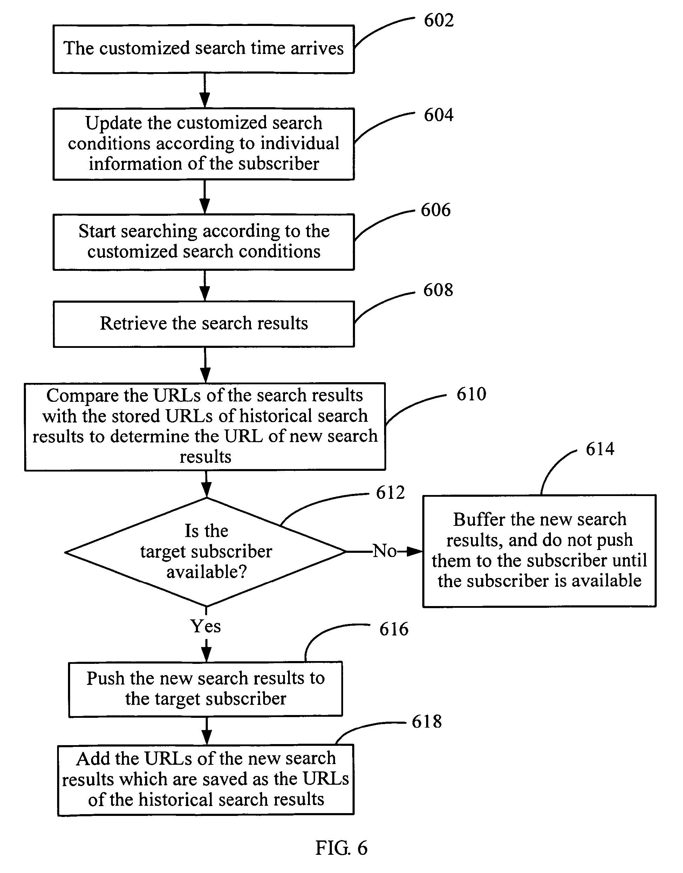

The foregoing embodiments may be combined in any way. The following describes the search process according to the embodiment of the present invention in detail through application instances. As shown in FIG 6, the search process includes the following steps:

Step 602: Judge whether the customized search time arrives, and start the customized search service upon arrival of the customized search time.

Step 604: Update the search conditions according to individual information of the subscriber. For example, the customized search keyword is "fashion", and if the location information of the subscriber shows that the subscriber is in Shenzhen, the search conditions are modified to " search for fashion in Shenzhen with the search scope being Shenzhen "; if the subscriber is on a business trip in Beijing, the search scope is modified to " Beijing to search for fashion in Beijing ".

Specifically, when the customized search conditions are changed according to the location information of the subscriber, the keyword corresponding to the location information of the subscriber may be added to the customized search conditions; when the customized search conditions are changed according to the presence information of the subscriber, the necessary keyword may be extracted from the presence information and added to the customized search conditions. For example, if the presence information is "the subscriber is playing football", the keyword "playing football " is extracted and added to the customized search conditions.

Step 606: Let the search engine start searching according to the updated search conditions.

Step 608: Retrieve the search results. The search results may be received in real time, or retrieved actively in real time.

Step 610: Compare the Universal Resource Locator (URL) information of the search results with previously stored URL information historical search results to determine the URL information of new search results.

Step 612: Judge whether the target subscriber is available. Proceed to step 614 if the target subscriber is unavailable, or proceed to step 616 if the target subscriber is available.

Step 614: Buffer the new search results temporarily , and do not push them to the subscriber until the subscriber is available.

Step 616: Push the new search results to the target subscriber. Perform step 618 after completion of step 616.

Step 618: Add the URL information of the new search results which are saved as the historical search results. Step 618 may occur before step 616.

The foregoing method embodiments may be applied to the apparatus embodiment and the system embodiment above.

In the embodiments of the present invention, the search conditions can be updated according to dynamic information of the subscriber; therefore, the subscriber does not need to change the keyword frequently in the customized search service, and the search keyword changes with the update of dynamic information of the subscriber, which facilitates the subscriber, improves the subscriber experience, and helps promote the service. Because the customized search time information of the subscriber is updated, the customized time can change as required by the subscriber.

In addition, in this embodiment, the search results are presented to groups so that the search recommendation service is implemented; through negotiation with members in the group, information security is ensured. In this embodiment, the search results are buffered when the subscriber is unavailable, which avoids losing the search results and ensures integrity of data.

Persons of ordinary skill in the art understand that all or part of the steps of the method specified in any of the embodiments above may be implemented by a program instructing relevant hardware. The program may be stored in a computer readable storage medium. When the program runs, the program executes the following steps: receiving input customized search conditions and the customized search time information, where the search conditions can be updated according to dynamic information of the subscriber; obtaining search results searched out by a search engine according to the search conditions upon arrival of the time specified in the customized search time information; and presenting the search results. The storage medium may be a Read Only Memory (ROM), a Random Access Memory (RAM), a magnetic disk, or an optical disk.

The above descriptions are merely exemplary embodiments of the present invention, but not intended to limit the scope of the present invention. Any modification, equivalent replacement, or improvement made without departing from the spirit and principles of the present invention shall fall within the protection scope of the present invention.

## Claims

1. A search method, **characterized by** comprising:
receiving search information customized by a subscriber, wherein the search information comprises search conditions and customized search time information;
updating the search conditions customized by the subscriber according to dynamic information of the subscriber;
obtaining search results searched out by a search engine according to the search conditions upon arrival of the customized search time; and
presenting the search results.

2. The search method according to claim 1, wherein the step of updating the search conditions according to the dynamic information of the subscriber comprises:
obtaining dynamic information of the subscriber;
extracting a keyword from the dynamic information; and
adding the keyword to the search conditions customized by the subscriber.

3. The search method according to claim 1, wherein:
the dynamic information of the subscriber comprises: presence information of the subscriber, location information of the subscriber, or individual information of the subscriber, or any combination thereof.

4. The search method according to any one of claims 1-3, further comprising:
updating the search time customized by the subscriber according to the dynamic information of the subscriber.

5. The search method according to any one of claims 1-3, wherein the search information further comprises:
information about target subscribers of a customized search service, wherein the target subscribers comprise independent subscribers and a subscriber group.

6. The search method according to claim 5, further comprising:
negotiating with the target subscribers of the customized search service; if any target subscriber fails in the negotiation or rejects the customized search service, presenting the search results to only target subscribers who negotiate successfully or agree to accept the customized search service.

7. The search method according to claim 5, wherein:
the step of obtaining the dynamic information of the subscriber comprises: obtaining dynamic information of the target subscribers of the customized search service; and
the step of adding the keyword to the search conditions customized by the subscriber comprises: adding the keyword extracted from the dynamic information of each target subscriber to the search conditions respectively to form search conditions corresponding to each target subscriber.

8. The search method according to any one of claims 1-3, wherein:
if the customized search time is multiple time points, the step of presenting the search results comprises:
presenting search results updated in a period from previous search time to current search time.

9. The search method according to any one of claims 1-3, wherein:
the search conditions comprise: a search keyword, a search type, or a search scope, or any combination thereof.

10. A search system, **characterized by** comprising:
a customized search subsystem, configured to: receive search information that comprises search conditions and customized search time information, update the search conditions customized by a subscriber according to dynamic information of the subscriber, obtain search results searched out by a search engine according to the search conditions upon arrival of the time specified by the customized search time information, and present the search results; and
the search engine, configured to search out the search results as requested by the customized search subsystem.

11. A customized search apparatus, **characterized by** comprising:
a service customizing module, configured to receive search information customized by a subscriber, wherein the search information comprises search conditions and customized search time information;
a customized search condition updating module, configured to update the search conditions customized by the subscriber according to dynamic information of the subscriber;
a search dispatch module, configured to send a search request to a search system according to the search conditions; and
a search result feedback module, configured to present search results to the subscriber according to results returned by the search system.
